# EUROPEAN PATENT APPLICATION

(11) **EP 3 070 659 A1**
(43) Date of publication of application: **21.09.2016**
(21) Application number: 16161234.6
(22) Date of filing: 18.03.2016
(51) Int. Cl.: G06Q 10/10

(54) **METHOD, DEVICE AND TERMINAL FOR DISPLAYING APPLICATION MESSAGES**

(30) Priority: 18.03.2015 CN 201510121170
(71) Applicant: Xiaomi Inc., Beijing 100085 (CN)
(72) Inventor: XU, Chao, 100085 Haidian District Beijing (CN); TAN, Kangxi, 100085 Haidian District Beijing (CN); LIU, Weixing, 100085 Haidian District Beijing (CN)
(74) Representative: Reeve, Nicholas Edward

(57) **Abstract**

The present disclosure relates to a method, a device and a terminal for displaying application messages, which belongs to the technical field of information processing. The method includes: detecting (101, 201) every preset time period whether there is at least one application having at least one unread message; when it is detected that one or more designated applications have at least one unread message, ranking (102, 203) application messages of each of the one or more designated applications according to a particular order; and displaying (103, 204) the ranked application messages of each of the one or more designated applications on a designated page. The method for displaying application messages is relatively smart and may save time and effort when a user viewing applications which have new message prompt.

## Description

### TECHNICAL FIELD

The present disclosure generally relates to the technical field of information processing, and more particularly to a method, a device and a terminal for displaying application messages.

### BACKGROUND

With the proliferation of smart terminals, various applications are continuously emerging. When a certain application on a smart terminal has a new unread message, a corner badge on the icon of the application will indicate the number of the unread messages to provide a message prompt for a user. However, a lot of applications are installed on the smart terminal, and messages of the applications are updated very quickly, and thus there may be many applications having new message prompt within a certain time period, and the icons of respective applications having new message prompts are still located in their original positions. Further, the icons of respective applications having new message prompts are usually distributed on different application icon display pages. Thus, if a user wants to determine whether respective applications have new prompt messages, the user needs to view all of the application icon display pages. Thus, there is an urgent need for a method for displaying application messages to make a user quickly know the applications which have new message prompt.

### SUMMARY OF THE INVENTION

In order to address the problem in related arts, the present disclosure provides a method, a device and a terminal for displaying application messages.

According to a first aspect of embodiments of the present disclosure, there is provided a method for displaying application messages. The method includes:
detecting whether there is at least one application having at least one unread message every preset time period; when it is detected that one or more designated applications have at least one unread message, ranking application messages of each of the one or more designated applications according to a particular order; and displaying the ranked application messages of each of the one or more designated applications on a designated page.

Optionally, the ranking of application messages of each of the one or more designated applications according to a particular order includes: for each of the one or more designated applications: determining a designated application category which the designated application belongs to; and querying a preset correspondence between application categories and priorities, and obtaining a priority corresponding to the designated application category; and according to the priority corresponding to each of the one or more designated applications, ranking the application messages of each of the one or more designated applications.

Optionally, the displaying of the ranked application messages of each of the one or more designated applications on a designated page includes: when a terminal is currently in a screen-unlock state, obtaining a user gesture trace; and when the user gesture trace matches with a preset particular gesture trace, displaying the ranked application messages of each of the one or more designated applications on a designated page having a transparency of a preset threshold, the designated page being displayed on a most front page among all the pages of the terminal.

Optionally, the displaying of the ranked application messages of each of the one or more designated applications on a designated page includes: when a terminal is currently in a screen-lock state, after a tap operation on a particular icon on a screen-lock interface is detected, creating a window for presenting applications; displaying the ranked application messages of each of the one or more designated applications on the window for presenting applications, the window for presenting applications being located on the screen-lock interface.

Optionally, before the ranking of application messages of each of the one or more designated applications according to a particular order, the method further includes: setting a plurality of application categories; and setting priorities for the plurality of application categories.

Optionally, the displaying of the ranked application messages of each of the one or more designated applications on a designated page includes: if there are a plurality of application icon display pages in a terminal, displaying the ranked application messages of each of the one or more designated applications on a most front application icon display page; or selecting a placing area for placing designated application icons from the plurality of application icon display pages, and displaying the ranked application messages of each of the one or more designated applications on the placing area.

According to a second aspect of embodiments of the present disclosure, there is provided a device for displaying application messages. The device includes: a detecting module configured to detect whether there is at least one application having at least one unread message every preset time period; a ranking module configured to, when it is detected that one or more designated applications have at least one unread message, rank application messages of each of the one or more designated applications according to a particular order; and a display module configured to display the ranked application messages of each of the one or more designated applications on a designated page.

Optionally, the ranking module is configured to: for each of the one or more designated applications: determine a designated application category which the designated application belongs to; and query a preset correspondence between application categories and priorities, and obtain a priority corresponding to the designated application category; and according to the priority corresponding to each of the one or more designated applications, rank the application messages of each of the one or more designated applications.

Optionally, the display module is configured to: when a terminal is currently in a screen-unlock state, obtain a user gesture trace; and when the user gesture trace matches with a preset particular gesture trace, display the ranked application messages of each of the one or more designated applications on a designated page having a transparency of a preset threshold, the designated page being displayed on a most front page among all the pages of the terminal.

Optionally, the display module is configured to: when a terminal is currently in a screen-lock state, after a tap operation on a particular icon on a screen-lock interface is detected, create a window for presenting applications; display the ranked application messages of each of the one or more designated applications on the window for presenting applications, the window for presenting applications being located on the screen-lock interface.

Optionally, the device further includes: a first setting module configured to set a plurality of application categories; and a second setting module configured to set priorities for the plurality of application categories.

Optionally, the display module is configured to: if there are a plurality of application icon display pages in a terminal, display the ranked application messages of each of the one or more designated applications on a most front application icon display page; or select a placing area for placing designated application icons from the plurality of application icon display pages, and display the ranked application messages of each of the one or more designated applications on the placing area.

According to a third aspect of embodiments of the present disclosure, there is provided a terminal. The terminal includes: a processor; and a memory for storing instructions executable by the processor; wherein the processor is configured to perform: detecting whether there is at least one application having at least one unread message every preset time period; when it is detected that one or more designated applications have at least one unread message, ranking application messages of each of the one or more designated applications according to a particular order; and displaying the ranked application messages of each of the one or more designated applications on a designated page.

According to a fourth aspect of embodiments of the present disclosure, there is provided a terminal computer program, which when executing on a processor of a terminal, performs any one of the above methods.

The technical solutions provided by embodiments of the present disclosure may have the following advantageous effects:

A terminal detects whether there is at least one application having at least one unread message every preset time period. When it is detected that one or more designated applications have at least one unread message, the terminal ranks application messages of each of the one or more designated applications according to a particular order and displays the ranked application messages of each of the one or more designated applications on a designated page. Since the application messages of the applications which have at least one unread message are ranked according to a particular order, and all the application messages are displayed together on the designated page, such method for displaying application messages is relatively smart and may save time and effort when a user viewing applications which have new message prompt.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart showing a method of displaying application messages according to an exemplary embodiment.
Fig. 2 is a flowchart showing a method of displaying application messages according to an exemplary embodiment.
Fig. 3 is a schematic diagram illustrating a first icon display according to an exemplary embodiment.
Fig. 4 is a schematic diagram illustrating a second icon display according to an exemplary embodiment.
Fig. 5 is a block diagram showing a first device for displaying application messages according to an exemplary embodiment.
Fig. 6 is a block diagram showing a second device for displaying application messages according to an exemplary embodiment.
Fig. 7 is a block diagram showing a terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

Before detailed description of embodiments of the present disclosure, terminologies used herein will be explained firstly. When whether at least one application has at least one unread message is detected, the "at least one application" refers to whole of the applications installed in a terminal, or a part of the applications which are selected by a user and are installed in a terminal, and may further refer to some applications which are frequently used by a user, and the embodiments of the present disclosure do not impose specific limitations on this. The application message may refer to an application icon having a corner badge, the whole contents or key contents of an unread message, the number of unread messages (for example, XX application has two unread messages), and the like, and embodiments of the present disclosure do not impose specific limitations on this, either.

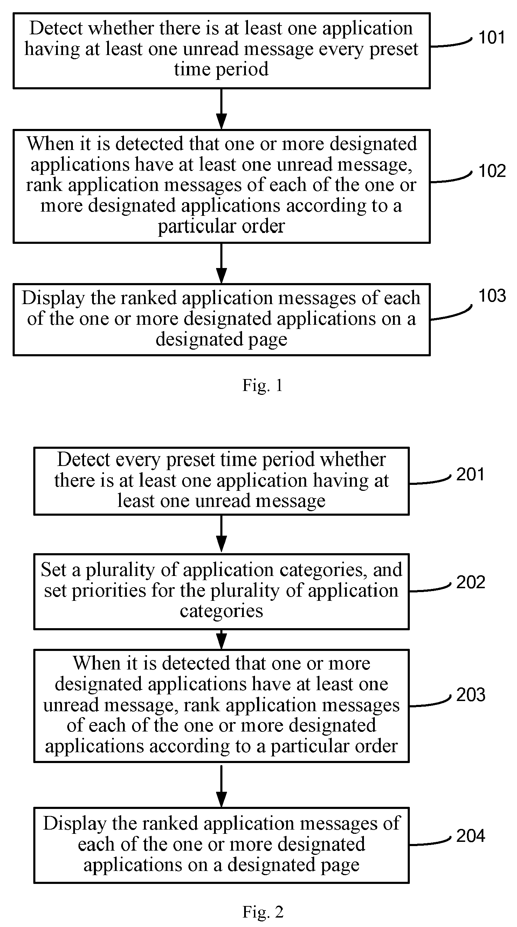

Fig. 1 is a flowchart showing a method for displaying application messages according to an exemplary embodiment. As shown in Fig. 1, the method for displaying application messages is applied in a terminal, and includes the following steps.
In step 101, whether there is at least one application having at least one unread message is detected every preset time period.
In step 102, when it is detected that one or more designated applications have at least one unread message, application messages of each of the one or more designated applications are ranked according to a particular order.
In step 103, the ranked application messages of each of the one or more designated applications are displayed on a designated page. In this context, page will be understood to mean a page or window in a browser, file navigation application, or graphical user interface running on the terminal.

In the method provided by the embodiment of the present disclosure, a terminal detects whether there is at least one application having at least one unread message every preset time period. When it is detected that one or more designated applications have at least one unread message, the terminal ranks application messages of each of the one or more designated applications according to a particular order and displays the ranked application messages of each of the one or more designated applications on a designated page. Since the application messages of the applications which have at least one unread message are ranked according to a particular order, and all the application messages of the applications which have at least one unread message are displayed together on the designated page, such method for displaying application messages is relatively smart and may save time and effort when a user viewing applications which have new message prompt.

Optionally, the ranking of application messages of each of the one or more designated applications according to a particular order includes: for each of the one or more designated applications: determining a designated application category which the designated application belongs to; and querying a preset correspondence between application categories and priorities, and obtaining a priority corresponding to the designated application category; and according to the priority corresponding to each of the one or more designated applications, ranking the application messages of each of the one or more designated applications.

Optionally, the displaying of the ranked application messages of each of the one or more designated applications on a designated page includes: when the terminal is currently in a screen-unlock state, obtaining a user gesture trace; and when the user gesture trace matches with a preset particular gesture trace, displaying the ranked application messages of each of the one or more designated applications on a designated page having a transparency of a preset threshold, the designated page being displayed on a most front page among all the pages of the terminal.

Optionally, the displaying of the ranked application messages of each of the one or more designated applications on a designated page includes: when a terminal is currently in a screen-lock state, after a tap operation on a particular icon on a screen-lock interface is detected, creating a window for presenting applications; displaying the ranked application messages of each of the one or more designated applications on the window for presenting applications, the window for presenting applications being located on the screen-lock interface.

Optionally, before the ranking of application messages of each of the one or more designated applications according to a particular order, the method further includes: setting a plurality of application categories; and setting priorities for the plurality of application categories.

Optionally, the displaying of the ranked application messages of each of the one or more designated applications on a designated page comprises; if there are a plurality of application icon display pages in a terminal, displaying the ranked application messages of each of the one or more designated applications on a most front application icon display page; or selecting a placing area for placing designated application icons from the plurality of application icon display pages, and displaying the ranked application messages of each of the one or more designated applications on the placing area.

All the above optional technical solutions may be combined randomly to form possible embodiments of the present disclosure and detailed descriptions are omitted herein.

Fig. 2 is a flowchart showing a method for displaying application messages according to an exemplary embodiment. As shown in Fig. 2, the method for displaying application messages is applied in a terminal and includes the following steps.

In step 201, whether there is at least one application having at least one unread message is detected every preset time period.

In an embodiment of the present disclosure, the preset time period may be 15 minutes or 30 minutes and the like. Embodiments of the present disclosure do not impose specific limitations on the length of the preset time period. There is usually a message push function for at least one application. Thus a terminal may receive push messages or notification messages regarding various applications, and the number of unread messages is usually marked by a corner badge on an icon of the application to provide prompt to a user. Further, in order to make a user know in time whether there is at least one application having at least one unread message, in the embodiment of the present disclosure, the terminal detects every preset time period whether there is at least one application having at least one unread message. Since a terminal usually marks messages as an unread state or a read state, when the terminal detects whether there is at least one application having at least one unread message, the terminal may judge according to states of the messages. When a message of an application is in an unread state, the message is determined as an unread message. Rather, in addition to the above detection approaches, other detection approaches may be employed and the embodiment of the present disclosure does not impose specific limitations on this.

In step 202, a plurality of application categories are set and priorities are set for the plurality of application categories.

In order to rank icons of the applications having at least one unread message in an order in subsequent process, the method provided by the embodiment of the present disclosure may further include the step of setting a plurality of application categories and setting priorities for the plurality of application categories.

The categories may be divided into an instant messaging category, a news and information category, an entertainment and game category, and the like, and the embodiment of the present disclosure does not impose specific limitations on this. Referring to the following Table 1, when setting priorities for the plurality of application categories, the instant messaging category may have the highest priority, and news and information category may have a secondary priority and the entertainment and game category may have the lowest priority. Rather, in addition to the above priority setting approach, other setting approaches may be employed and the embodiment of the present disclosure does not impose specific limitation on this.

**Table 1**

| Application Categories | Priorities |
|---|---|
| instant messaging category | five star |
| news and information category | four star |
| entertainment and game category | three star |
| ... | ... |

After the step of setting of the application categories and the priorities corresponding to the application categories, the applications having at least one unread message may be classified according to the application categories, and the application messages of the applications having at least one unread message may be ranked according to the priorities and the classification result. Specifically, application messages of the applications having a higher priority may receive a higher ranking, and application messages of the applications having a lower priority may receive a lower ranking. Detailed steps will be described in step 203.

In step 203, when it is detected that one or more designated applications have at least one unread message, application messages of each of the one or more designated applications are ranked according to a particular order.

In the embodiment of the present disclosure, after obtaining a plurality of designated applications having at least one unread message, the application messages of each of the designated applications may be ranked according to the above set application categories and priorities. Detailed implementations may be as follows: for each of the one or more designated applications: determining a designated application category which the designated application belongs to; and querying a preset correspondence between application categories and priorities, and obtaining a priority corresponding to the designated application category; and according to the priority corresponding to each of the one or more designated applications, ranking the application messages of each of the one or more designated applications.

For example, applications of the instant messaging category may include various chatting applications, information interaction applications and the like. Applications of the news and information category may include various news applications, micro blogs, and the like. Applications of the entertainment and game category may include various player applications, game applications and the like. A terminal may store in advance names and icons of various applications under each application category or record functions which the application category may realize. Thus, for a designated application having at least one unread message, the terminal may automatically determine the category which the designated application belongs to according to the name, the icon or the realized functions of the designated application. After the step of determining the category which each of the designated applications belongs to, the priorities of respective designated applications may be obtained by querying the above correspondence between the application categories and priorities as shown in Table 1, and thereby the application messages of each of the designated applications may be ranked according to the priorities of each of the designated applications.

When the terminal ranks the application messages, application messages of the designated applications which belong to the instant messaging category receive a highest ranking, followed by application messages of the designated applications which belong to the news and information category. And, the application messages of the designated applications which belong to the news and information category are followed by the application messages of the designated applications which belong to the entertainment and game category. When the terminal ranks the application messages of designated applications of the same category, the messages may be ranked randomly. The application messages may also be ranked according to the number of the unread messages, and the embodiment of the present disclosure does not impose specific limitations on this. For example, designated applications having a larger number of unread messages may be ranked before designated applications having a smaller number of unread messages.

It shall be noted that the embodiment of the present disclosure is illustrated taking examples of the instant messaging category, the news and information category and the entertainment and game category only, other application categories in addition to the above may be employed, for example, system maintenance category may be employed. When the terminal includes application categories other than the above three categories, the processes are similar to the above process. That is, a priority shall be set for each application category, and application messages of a designated application having at least one unread message may be ranked according to the priorities, and repeated descriptions omitted herein.

In step 204, the ranked application messages of each of the one or more designated applications are displayed on a designated page.

In an embodiment of the present disclosure, different approaches for displaying the application messages may be employed when the terminal is in a unlock state and a lock state. When the terminal is in the screen-unlock state, the following approach is employed to display the ranked application messages of each of the designated applications on a designated page: obtaining a user gesture trace; and when the user gesture trace matches with a preset particular gesture trace, displaying the ranked application messages of each of the one or more designated applications on a designated page having a transparency of a preset threshold.

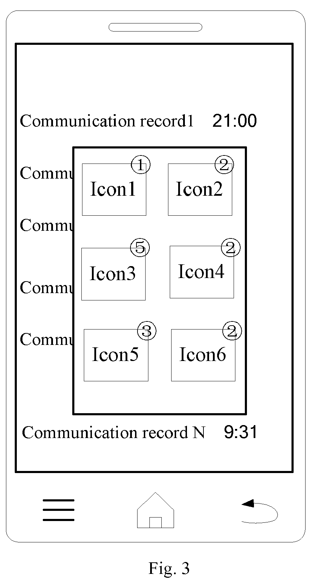

Referring to Fig. 3, the designated page is displayed in the most front page among all the pages of the terminal. The designated page may have a transparency of 100%, 50% or 20% and the like, and embodiments of the present disclosure do not impose specific limitations on this. The particular gesture trace may be a gesture trace of two fingers sliding towards the same direction, and embodiments of the present disclosure do not impose specific limitations on this.

In the unlock state, when the obtained user gesture trace matches with the preset particular gesture trace, the displaying of the application messages of designated applications having at least one unread message is triggered. In an example where the application messages are icons, when the terminal displays the icons of designated applications, the approach as shown in Fig. 3 may be employed. In Fig. 3, the designated page is dedicated to display icons of designated applications having at least one unread message, and a corner badge of the icon of at least one application indicates the number of unread messages. Since there may be a plurality of designated applications having at least one unread message, not all of the icons are displayed on the current designated page as shown in Fig. 3, and at this time, the rest of the icons may be triggered to be displayed on the current designated page by sliding operations of fingers.

It shall be noted that, in the unlock state, in addition to the approach of determining whether to display icons of designated applications having at least one unread message according to the user gesture trace, an approach of triggering display of icons according to a tap operation of a particular icon may be employed, and embodiments of the present disclosure do not impose specific limitations on this. For example, a terminal may set in advance a particular icon for triggering display of icons of designated applications having at least one unread message. When the particular icon is tapped, the terminal displays the ranked application messages of each designated application on the designated page.

When the terminal is in the screen-lock state, the following approach may be employed to display the ranked application messages of each of the designated applications on the designated page: after a tap operation on a particular icon on a screen-lock interface is detected, creating a window for presenting applications; displaying the ranked application messages of each of the one or more designated applications on the window for presenting applications, the window for presenting applications being located on the screen-lock interface.

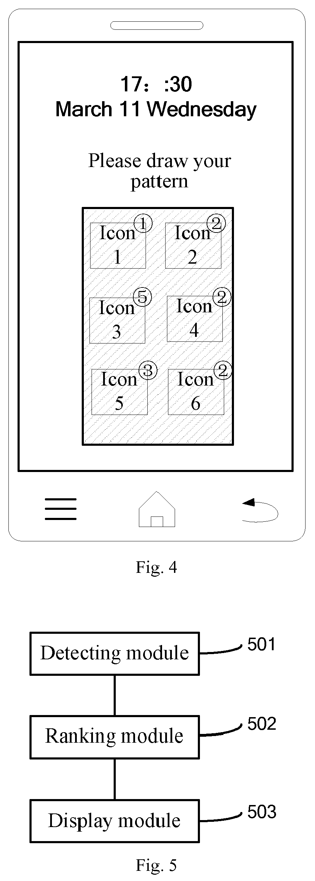

In an example where the application messages are icons, referring to Fig. 4, a window for presenting applications is displayed on the lock interface. The window for presenting applications is created after the detection of a tap operation on a particular icon on the screen-lock interface. A plurality of icons of designated applications having at least one unread message are arranged in the window for presenting applications. The particular icon may be the above particular gesture. When user's gesture trace matches with a preset particular gesture trace, the ranked icons of designated applications are displayed in the window for presenting applications, and embodiments of the present disclosure do not impose specific limitations on this.

In another embodiment, when detecting designated applications having at least one unread message, after application messages of all the designated applications are ranked randomly or are ranked according to the approach in the above step 203, if there are a plurality of application icon display pages in the terminal, the ranked application messages of each of the one or more designated applications are displayed on a most front application icon display page, for example, on the first application icon display page. Or, a placing area for placing designated application icons is selected from the plurality of application icon display pages, and the ranked application messages of each of the one or more designated applications are displayed on the placing area so that a user may gather the applications together for view. It shall be noted that, when the terminal displays the application messages, any one of the above may be employed and embodiments of the present disclosure do not impose specific limitations on this.

In the method provided by the embodiment of the present disclosure, a terminal detects whether there is at least one application having at least one unread message every preset time period. When it is detected that one or more designated applications have at least one unread message, the terminal ranks application messages of each of the one or more designated applications according to a particular order and displays the ranked application messages of each of the one or more designated applications on a designated page. Since the application messages of the applications which have at least one unread message are ranked according to a particular order, and all the application messages of the applications which have at least one unread message are displayed together on the designated page, such method for displaying application messages is relatively smart and may save time and effort when a user viewing applications which have new message prompt without need of viewing all application icon display pages. Consequently, the user may have a good experience.

Fig. 5 is a block diagram showing a device for displaying application messages according to an exemplary embodiment. Referring to Fig. 5, the device includes a detecting module 501, a ranking module 502 and a display module 503.

The detecting module 501 is connected with the ranking module 502, and is configured to detect whether there is at least one application having at least one unread message every preset time period. The ranking module 502 is connected with the display module 503 and is configured to, when it is detected that one or more designated applications have at least one unread message, rank application messages of each of the one or more designated applications according to a particular order. The display module 503 is configured to display the ranked application messages of each of the one or more designated applications on a designated page.

Optionally, the ranking module is configured to: for each of the one or more designated applications: determine a designated application category which the designated application belongs to; and query a preset correspondence between application categories and priorities, and obtain a priority corresponding to the designated application category; and according to the priority corresponding to each of the one or more designated applications, rank the application messages of each of the one or more designated applications.

Optionally, the display module is configured to: when a terminal is currently in a screen-unlock state, obtain a user gesture trace; and when the user gesture trace matches with a preset particular gesture trace, display the ranked application messages of each of the one or more designated applications on a designated page having a transparency of a preset threshold, the designated page being displayed on a most front page among all the pages of the terminal.

Optionally, the display module is configured to: when a terminal is currently in a screen-lock state, after a tap operation on a particular icon on a screen-lock interface is detected, create a window for presenting applications; display the ranked application messages of each of the one or more designated applications on the window for presenting applications, the window for presenting applications being located on the screen-lock interface.

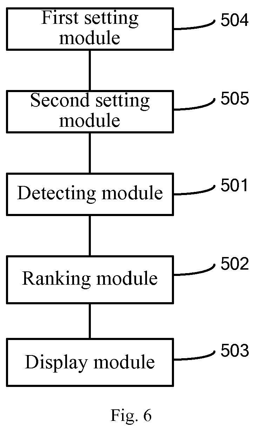

Referring to Fig. 6, the device may further include: a first setting module 504 configured to set a plurality of application categories; and a second setting module 505 configured to set priorities for the plurality of application categories.

Optionally, the display module is configured to: if there are a plurality of application icon display pages in a terminal, display the ranked application messages of each of the one or more designated applications on a most front application icon display page; or select a placing area for placing designated application icons from the plurality of application icon display pages, and display the ranked application messages of each of the one or more designated applications on the placing area.

In the device provided by the embodiment of the present disclosure, whether there is at least one application having at least one unread message is detected every preset time period. When it is detected that one or more designated applications have at least one unread message, application messages of each of the one or more designated applications are ranked according to a particular order and the ranked application messages of each of the one or more designated applications are displayed on a designated page. Since the application messages of the applications which have at least one unread message are ranked according to a particular order, and all the application messages of the applications which have at least one unread message are displayed together on the designated page, such approach for displaying application messages is relatively smart and may save time and effort when a user viewing applications which have new message prompt without need of viewing all application icon display pages. Consequently, the user may have a good experience.

With respect to the devices in the above embodiments, specific operations performed by respective modules have been described in detail in the embodiments of the methods and therefore repeated descriptions are omitted here.

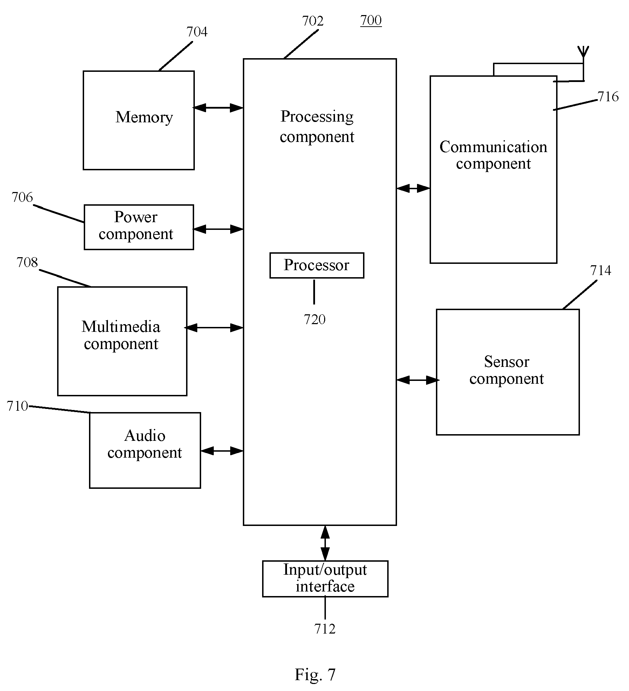

Fig. 7 is a block diagram showing a terminal 700 for displaying application messages according to an exemplary embodiment. For example, the terminal 700 may be a mobile phone, a computer, a digital broadcast terminal, a messaging device, a gaming console, a tablet, a medical device, exercise equipment, a personal digital assistant, and the like.

Referring to Fig. 7, the terminal 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the terminal 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the terminal 700. Examples of such data include instructions for any applications or methods operated on the terminal 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the terminal 700. The power component 706 may include a power management system, one or more power sources, and any other components associated with the generation, management, and distribution of power in the terminal 700.

The multimedia component 708 includes a screen providing an output interface between the terminal 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and/or the rear camera may receive an external multimedia datum while the terminal 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the terminal 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the terminal 700. For instance, the sensor component 714 may detect an open/closed status of the terminal 700, relative positioning of components, e.g., the display and the keypad, of the terminal 700, a change in position of the terminal 700 or a component of the terminal 700, a presence or absence of user contact with the terminal 700, an orientation or an acceleration/deceleration of the terminal 700, and a change in temperature of the terminal 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the terminal 700 and other devices. The terminal 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the terminal 700, for performing the above-described methods. For example, the non-transitory computer-readable storage medium may be a ROM, a RAM, a CD-ROM, a magnetic tape, a floppy disc, an optical data storage device, and the like.

There is also provided a non-transitory computer-readable storage medium including instructions when executed by the processor in the mobile terminal, causing the mobile terminal to perform the methods for displaying application messages. The method may include: detecting whether there is at least one application having at least one unread message every preset time period; when it is detected that one or more designated applications have at least one unread message, ranking application messages of each of the one or more designated applications according to a particular order; and displaying the ranked application messages of each of the one or more designated applications on a designated page.

Optionally, the ranking of application messages of each of the one or more designated applications according to a particular order includes: for each of the one or more designated applications: determining a designated application category which the designated application belongs to; and querying a preset correspondence between application categories and priorities, and obtaining a priority corresponding to the designated application category; and according to the priority corresponding to each of the one or more designated applications, ranking the application messages of each of the one or more designated applications.

Optionally, the displaying of the ranked application messages of each of the one or more designated applications on a designated page includes: when a terminal is currently in a screen-unlock state, obtaining a user gesture trace; and when the user gesture trace matches with a preset particular gesture trace, displaying the ranked application messages of each of the one or more designated applications on a designated page having a transparency of a preset threshold, the designated page being displayed on a most front page among all the pages of the terminal.

Optionally, the displaying of the ranked application messages of each of the designated applications on a designated page includes: when a terminal is currently in a screen-lock state, after a tap operation on a particular icon on a screen-lock interface is detected, creating a window for presenting applications; displaying the ranked application messages of each of the one or more designated applications on the window for presenting applications, the window for presenting applications being located on the screen-lock interface.

Optionally, before the ranking of application messages of each of the one or more designated applications according to a particular order, the method further includes: setting a plurality of application categories; and setting priorities for the plurality of application categories.

Optionally, the displaying of the ranked application messages of each of the one or more designated applications on a designated page includes: if there are a plurality of application icon display pages in a terminal, displaying the ranked application messages of each of the one or more designated applications on a most front application icon display page; or selecting a placing area for placing designated application icons from the plurality of application icon display pages, and displaying the ranked application messages of each of the one or more designated applications on the placing area.

In the non-transitory computer-readable storage medium provided by the embodiment of the present disclosure, whether there is at least one application having at least one unread message is detected every preset time period. When it is detected that one or more designated applications have at least one unread message, application messages of each of the one or more designated applications are ranked according to a particular order and the ranked application messages of each of the one or more designated applications are displayed on a designated page. Since the application messages of the applications which have at least one unread message are ranked according to a particular order, and all the application messages of the applications which have at least one unread message are displayed together on the designated page, such approach for displaying application messages is relatively smart and may save time and effort when a user viewing applications which have new message prompt without need of viewing all application icon display pages. Consequently, the user may have a good experience.

Where functional modules are referred to in the apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the present disclosure will be apparent to those skilled in the art from consideration of the specification and practice of the invention disclosed here. This application is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for displaying application messages, **characterized in that** the method comprises:
detecting (101, 201) every preset time period whether there is at least one application having at least one unread message;
when it is detected that one or more designated applications have at least one unread message, ranking (102, 203) application messages of each of the one or more designated applications according to a particular order; and
displaying (103, 204) the ranked application messages of each of the one or more designated applications on a designated page.

2. The method according to claim 1, **characterized in that** the ranking (203) of application messages of each of the one or more designated applications according to a particular order comprises:
for each of the one or more designated applications:
determining a designated application category which the designated application belongs to; and
querying a preset correspondence between application categories and priorities, and
obtaining a priority corresponding to the designated application category; and
according to the priority corresponding to each of the one or more designated applications, ranking the application messages of each of the one or more designated applications.

3. The method according to claim 1 or 2, **characterized in that** the displaying of the ranked application messages of each of the one or more designated applications on a designated page comprises:
when a terminal is currently in a screen-unlock state, obtaining a user gesture trace; and
when the user gesture trace matches with a preset particular gesture trace, displaying the ranked application messages of each of the one or more designated applications on a designated page having a transparency of a preset threshold, the designated page being displayed on a front most page among all the pages of the terminal.

4. The method according to claim 1, 2 or 3, **characterized in that** the displaying of the ranked application messages of each of the one or more designated applications on a designated page comprises:
when a terminal is currently in a screen-lock state, after a tap operation on a particular icon on a screen-lock interface is detected, creating a window for presenting applications;
displaying the ranked application messages of each of the one or more designated applications on the window for presenting applications, the window for presenting applications being located on the screen-lock interface.

5. The method according to claim 2, **characterized in that** before the ranking of application messages of each of the one or more designated applications according to a particular order, the method further comprises:
setting a plurality of application categories; and
setting priorities for the plurality of application categories.

6. The method according to any preceding claim, **characterized in that** the displaying of the ranked application messages of each of the one or more designated applications on a designated page comprises;
if there are a plurality of application icon display pages in a terminal, displaying the ranked application messages of each of the one or more designated applications on the front most application icon display page; or
selecting a placing area for placing designated application icons from the plurality of application icon display pages, and displaying the ranked application messages of each of the one or more designated applications on the placing area.

7. A device for displaying application messages, **characterized in that** the device comprises:
a detecting module (501) configured to detect every preset time period whether there is at least one application having at least one unread message;
a ranking module (502) configured to, when it is detected that one or more designated applications have at least one unread message, rank application messages of each of the one or more designated applications according to a particular order; and
a display module (503) configured to display the ranked application messages of each of the one or more designated applications on a designated page.

8. The device according to claim 7, **characterized in that** the ranking module (502) is configured to:
for each of the one or more designated applications:
determine a designated application category which the designated application belongs to; and
query a preset correspondence between application categories and priorities, and obtain a priority corresponding to the designated application category; and
according to the priority corresponding to each of the one or more designated applications, rank the application messages of each of the one or more designated applications.

9. The device according to claim 7 or 8, **characterized in that** the display module (503) is configured to:
when a terminal is currently in a screen-unlock state, obtain a user gesture trace; and
when the user gesture trace matches with a preset particular gesture trace, display the ranked application messages of each of the one or more designated applications on a designated page having a transparency of a preset threshold, the designated page being displayed on a front most page among all the pages of the terminal.

10. The device according to claim 7, 8 or 9, **characterized in that** the display module (503) is configured to:
when a terminal is currently in a screen-lock state, after a tap operation on a particular icon on a screen-lock interface is detected, create a window for presenting applications; and
display the ranked application messages of each of the one or more designated applications on the window for presenting applications, the window for presenting applications being located on the screen-lock interface.

11. The device according to claim 8, **characterized in that** the device further comprises:
a first setting module (504) configured to set a plurality of application categories; and
a second setting module (505) configured to set priorities for the plurality of application categories.

12. The device according to any of claims 7 to 11, **characterized in that** the display module (503) is configured to:
if there are a plurality of application icon display pages in a terminal, display the ranked application messages of each of the one or more designated applications on a front most application icon display page; or
select a placing area for placing designated application icons from the plurality of application icon display pages, and display the ranked application messages of each of the one or more designated applications on the placing area.

13. A terminal (700), **characterized in that** the terminal (700) comprises:
a processor (702); and
a memory (704) for storing instructions executable by the processor (702);
wherein the processor is configured to perform:
detecting every preset time period whether there is at least one application having at least one unread message;
when it is detected that one or more designated applications have at least one unread message, ranking application messages of each of the one or more designated applications according to a particular order; and
displaying the ranked application messages of each of the one or more designated applications on a designated page.

14. A computer program, which when executing on a processor of a terminal, performs a method according to any one of claims 1 to 6.
